# EUROPEAN PATENT APPLICATION

(11) **EP 3 885 744 A1**
(43) Date of publication of application: **29.09.2021**
(21) Application number: 20165640.2
(22) Date of filing: 25.03.2020
(51) Int. Cl.: G01N 21/89, G06K 9/36, G01N 21/88

(54) **MAPPING AND REMOVING A DEFECT FROM A WEB MATERIAL**

(71) Applicant: Fitesa S.A., 90010-000 Porto Alegre (BR)
(72) Inventor: FOGELBERG, Anders, 90010-000 Porto Alegre (BR); EINARSON, Lennart, 182 34 Danderyd (SE)
(74) Representative: KATZAROV S.A.

(57) **Abstract**

The present relates to a device for mapping at least one defect in a web of material comprising a mapping station comprises two modules named a first module and a second module and a computation module,

the first module being arranged for marking the web with at least one reference mark at a known position, and for determining the initial position of said defect, and

the second module being arranged for detecting a new position of the reference mark when said reference mark is read by the said second module,

the computation module being arranged for computing a displacement of the reference mark to determine a final position of the detected defect at second station based on the computed displacement of the reference mark.

The invention further relates to a system, a method for mapping and a method for removing a defect.

## Description

### Technical Field

The present invention relates to a device for mapping at least one defect in a web and a method related thereof. The invention also concerns a system for mapping and removing a defect based on the device for mapping said defect and a system related thereof.

### Background of the art

Currently there are several web inspection systems and methods for web inspection in search of defects and occurrences. The visual control itself, for analyzing the existence of any defect or occurrence and in which part of the web it occurs, is commonly used.

One of these systems is disclosed in U.S. 7,006,669, and identifies defective regions through data acquired by cameras and subsequently analyzed. The location of this defect is estimated with a mathematical calculation used to define the position of the defect in the final product considering the approximate behavior of the web during the process.

During the production, the data are verified and collected, the defect is located and designed virtually through a software, which changes the pixel colors of the image in an approximate region of the web. The system of document U.S. 7,006,669 does not have a high reliability, in particular for nonwoven materials, because when the web is backlit and the image is in high resolution, sometimes the normal variation in the material formation (fiber structure) may appear at the pixel level as small holes and/or fine points in thicker and more solid regions. This makes it difficult to differentiate them from real defects.

Besides that, during the process, each step exerts a tension on the previous step, and this tension exerted on the web stretches the web, also eventually moving the identified position of the defect or occurrence further towards the back and towards the center of the web. In other words, the position of the defect varies between the detection stage/station and the cutting stage/station.

This effect is caused by the web becoming longer and/or narrower due to the tension applied to it during the production process. Therefore, mathematical calculations are inaccurate for this purpose.

At the end of the process, the material can be removed by splicing of the web or by rejecting the finish reel where the defect is thought to be. When the defect is removed by rejection of the finished reel, the position indicated by the current inspection systems does not consider the tension, and the defect can physically be in the removed reel or on other finished reel, in this case the material without defect is removed and the defective material ends up being sent to the customer.

When the defect is removed by splicing, the lack of knowledge of the exact position of the defect causes a very large imprecision of the defective area, so a larger area of the web is removed, resulting in a greater waste of material, to ensure that the defect is removed.

Therefore, there is a need for an improved method to map the defect on a web material.

### Summary of the invention

The above problems are solved or at least minimize by the present invention.

The present invention concerns a device for mapping at least one defect in a web of material designed for being wound in at least a reel, the device comprising a mapping station for detecting and mapping an initial position of said defect on the web,
the device being characterized in the mapping station comprises two modules named a first module and a second module and a computation module, the first module being upstream the second module,
the first module being arranged for marking the web with at least one reference mark at a known position, and for determining the initial position of said defect, and
the second module being arranged for detecting a new position of the reference mark when said reference mark is read by the said second module,
the computation module being arranged for computing a displacement of the reference mark that occurred between the known position and the new position of the reference mark so as to determine a final position of the detected defect at second module based on the computed displacement of the reference mark.

The system and method for determining the exact position of defects are primarily intended to indicate the exact position of a defect or occurrence in the web. It is known that the position of a defect can vary from one first station to another downstream station. This variation notably comes from the stretches/forces that are applied on the web during the production process.

The present invention proposes to use reference marks made on the web during the production process. For instance, these marks are held at the edge of the web on one or both sides of the web.

Marks are produced during the web production process. In this way, the marks on the edge of the web are exposed to the same tension as the web throughout the entire production process.

The first module of the mapping station registers a known position of the reference mark and map the defect. A second module, downstream said first module perform a second mapping of the reference mark to determine a new position of the reference mark. If the position of the reference mark changes between the first module and the second module, the computation module computes the displacement between the known position and the new position. If there is no displacement, the known position and the new position are identical, meaning that the position of the defect did not change either.

If a displacement has occurred, it is possible to compute the final position of the defect by implementing the displacement to the initial position determined by the first mapping module.

In other words, the reference mark is used as a template to evaluate the displacement that could occur to the defect mapped at the first mapping station. If the second mapping module is coupled to a cutting station arranged for removing the web comprising the defect, it is important to know the exact position of the defect when the web passes before the cutting station to remove the defect.

The computation module can be arranged for executing a computer program (a software). For instance, the software can gather various information/data chosen among the position information of the defect(s) in the web, the time, the distance and speed of the web. The software is capable of detecting the shift or displacement of the reference mark position along (i.e. in length) and/or across the direction of the production process and determining the final position of the defect depending on said shift/displacement.

The present invention allows to identify the exact position of defects detected by web inspection. Due to the lack of accuracy in determining the final position of defects referenced by existing inspection systems, it is common to remove a larger amount of material in order to cover the defect or to remove the wrong finished reel indicated by the current systems. The disclosed system and method prevent the removal of material without defect and the delivery of defective material to the customer, and further decrease the amount of material removed because of defect.

In the present invention, the first module is arranged for determining the known position of the reference mark and the initial position of the detected defect whereas the second module is arranged for determining the new position of the reference mark. The known position, the initial position and the new position are transmitted to the computation module as input. Based on this input, the computation module computes the displacement of the reference mark and deduces the final position of the detected defect depending on said displacement. The computation module can also take as input other data such as the speed of the web material.

In an embodiment, the computation module is further arranged for computing the displacement of the defect based on the tension applied on the web between the first module and the second module.

In the present invention, the determination of the final position of the defect is improved by considering the tension inherent to the production process. The tension may cause a deformation of the web material and thereby changing the position or coordinates of the defect from an initial position to a final position. The tension may results in elongation or width reduction of the web material. This is particularly true for a flexible material like non woven material. In other words, the coordinates of the detected defect at the first module (initial position) can be different from the coordinate of the same defect but at the second module (i.e. final position). If a cutting station operates the web material based on a false or an inaccurate position of the defect, the defect may either not be removed at all or only partially removed along with web material without defect.

To that end, the reference mark of the web are exposed to the same tension as the web area comprising the defect. It is possible to deduce the final position of the defect based on the behavior of the reference mark. The reference mark gives information regarding the web elongation/width reduction, which is necessary to have the position of the defect found on the web with accuracy.

In one embodiment, the device is capable of determining the final position with precision of maximum +/- 2 meter, preferably +/- 1 meter (In the machine direction sense) along the direction of the production process and with a precision of maximum +/- 2 mm, preferably 1 mm across the direction of the production process.

In an embodiment, the computation module is further arranged for assembling a web virtual map comprising the final position of the defect, said map being updated in real time depending on the displacement computed by the computation module. This allows a real time monitoring of the web to determine the tension applied to the web during the production process.

In one embodiment, the second module is arranged for detecting displacement of the reference mark across the direction of the production process and along the direction of the web production process. In this embodiment, the second module advantageously monitors the displacement in two orthogonal directions to improve the accuracy of the defect positioning.

In an embodiment, the reference mark is made with UV light paint so as to be detected upon UV radiation. The paint is invisible unless upon UV radiation.

In one embodiment, a plurality of reference marks is distributed unevenly on the web, each marks having a known position. This is advantageous because it increases the accuracy of the defect detection.

In an embodiment, the reference is applied on the edge of the web material, preferably on one side or on the two sides of said edge.

In one embodiment, the material is chosen among fabric for instance a non woven material.

The invention also concerns a system for removing at least one defect in a web of material designed for being wound in at least a reel, the system comprising a device according to the present invention, the system being characterized in that a cutting station is coupled to said second module of the mapping station, said cutting station being arranged for removing a portion of the web material comprising the detected defect according to the final position.

The particular advantages of the system are similar to the ones of the device of the invention and will thus not be repeated here.

In an embodiment, the system further comprises a winder for unwinding the web and a rewinder for rewinding the web and applying a tension on the web extending between said winder and rewinder, said winder being position upstream the first module, said rewinder being position downstream the cutting station.

The web material is tighten or stretched between the rewinder and the winder so that there is a tension applied on said web material.

In one embodiment, the cutting device is arranged either for splicing a portion of the web comprising the defect or separating the reel comprising the defect.

The cutting station operates the web material to remove the portion of the web comprising the defect. For instance, the cutting station splices the portion of the web material comprising the defect; or the reel that comprises the defect is separated or discarded or segregated from the other reels that do not comprise any detected defect.

The invention further relates to a method for mapping at least one defect in a web of material designed for being wound in at least a reel, the method comprising:
- i) Providing the web of material to be wound to form the reel;
- ii) Detecting and mapping an initial position of at least a defect on the web;
- iii) Marking the web with at least one reference mark at a known position with a first module;
- iv) Detecting a new position of the reference mark with a second module placed downstream the first module;
- v) Computing a displacement of the reference mark that occurred between the first module and the second module based on the known position and the new position of the reference mark;
- vi) Determining a final position of the detected defect at second station based on the computed displacement of the reference mark.

The particular advantages of the method for mapping are similar to the ones of the device of the invention and will thus not be repeated here.

In an embodiment, the method further comprises :
- v) Assembling a web virtual map comprising the final position of the defect, said map being updated in real time depending on the computed displacement;

The invention also concerns a method for removing at least one defect in a web of material designed for being wound in at least a reel, the method comprises :
- i) Mapping at least on defect by using a method according to the present invention;
- ii) Removing the detected defect either by splicing a portion of the web comprising the defect or separating the reel comprising the defect.

The particular advantages of the method for removing are similar to the ones of the system of the invention and will thus not be repeated here.

The embodiments describe for the device or the system also apply to the methods according to the present invention mutatis mutandis.

### Brief description of the drawings

Further particular advantages and features of the invention will become more apparent from the following non-limitative description of at least one embodiment of the invention which will refer to the accompanying drawings, wherein
- Figures 1 represents a web material with a defect;
- Figures 2 represents a system according to a first embodiment of the present invention;
- Figure 3 represents a comparative image representing two overlapping rectangles: the rectangle A represents a defect mark A1 mapped with a state of the art system; the rectangle B represents the web and the defect A1 named here B1, mapped by the present invention;

### Detailed description of the invention

The present detailed description is intended to illustrate the invention in a non-limitative manner since any feature of an embodiment may be combined with any other feature of a different embodiment in an advantageous manner.

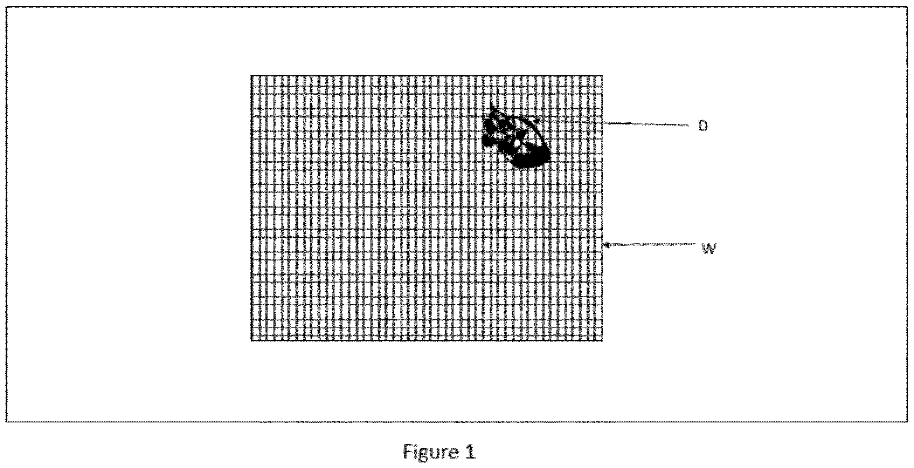

The point of the invention is to detect for instance one defect D on a web material W as represented in figure 1. In the present embodiment, the web material W is a nonwoven material used to manufacture hygiene fabrics. The web material W is the raw material that potentially comprises a defect, said web material being rolled to form the reel.

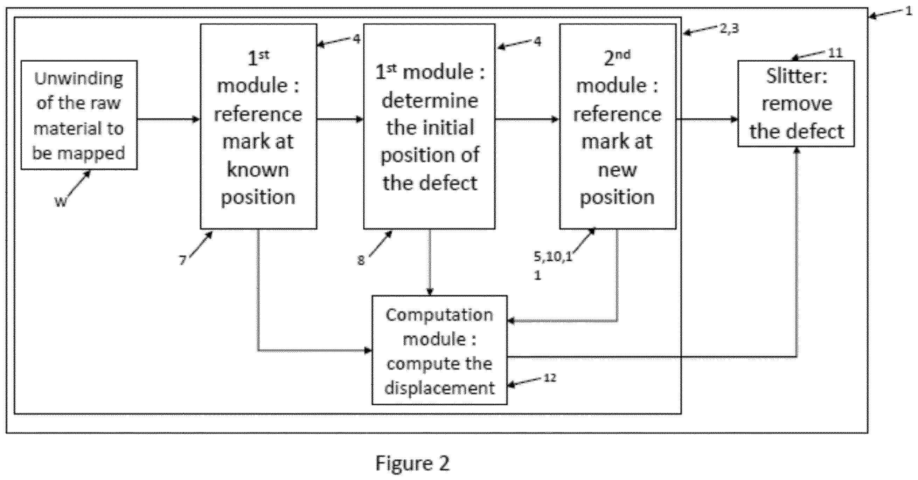

Figure 2 represents a system 1 according to a first embodiment of the present invention comprising a device for mapping 2.

The system 1 is designed for manufacturing reel of nonwoven material from a roll of web material W (the roll of web material and the reel are not represented in the figures).

The system 1 comprises a mapping station 3 with a first module 4 and a second module 5, the second module 5 being placed downstream the first module 4 along the direction of the production process.

The first module 4 is designed for marking the web material W with at least a reference mark 6 and determining the known position of said reference mark 6. The first module 4 is also designed for detecting at least one defect D and determining the initial position of said detected defect D.

The second module 5 is designed for determining the new position of the reference mark 6.

The first module 4 comprises an applicator, for instance an ink applicator 7, designed for producing the reference marks or marks 6 on the web. The marks 6 are placed in the edge of the web W on one side along the direction of the production process The applicator 7, at known intervals, performs a reference mark 6 at the edge of the web, the web W being pulled into the next step of the process.

The reference marks 6 are preferably made with a UV visible ink. The space between the reference marks 6 are preferably irregular since the nonwoven web material W is flexible so that it is hardly possible to have a regular space between two reference marks 6.

The first module 4 comprises a first sensor 8 designed for determining the initial position of the reference mark 6. In the present case, the first sensor 8 further comprises a UV light 9 for reading the UV visible ink of each reference marks 6.

The first module 4 can also measure other parameters such as the speed of the web W production via an encoder, the timing, the coordinates of the reference marks 6.

The first module 4 is also arranged for detecting the defect D and the initial position of the detected defect D.

Overall, the first module 4 is capable of generating a first map of the web W comprising the known position of the reference marks 6 and the initial position of the detected defect D.

The second module 5 comprises a second sensor 10 for determining the new position of the reference marks 6. The second sensor 10 further comprises another UV light 11 for reading the UV visible ink of each reference marks 11.

The second module 5 is coupled to a slitter or cutting station 11 designed for removing the portion of the web W comprising the detected defect D.

The first module 4 and the second module 5 are connected with a computation module 12 run by a software. The computation module 12 collects the information from the first module 4 and the second module 5 to compute a displacement between the known position of the reference mark 6 and the new position of the reference mark 6.

The computed displacement gives information regarding the web elongation/width reduction generated by tension forces that might have changed the coordinates of the reference marks 6 from the known position to a new position.

The computation module is capable of updating the first map to update the position of the reference marks 6 (from the known position to the new position) so as to determine the final position of the detected defect D.

In other words, the computation module, preferably the software of said computation module, compares the known position with the new position to determine the displacement. The computed displacement allows to evaluate the deformations of the web W between the first module 4 and the second module 5. The software implements the computed displacement on the initial position of the detected defect D to compute the final position of the detected defect D.

The computation module 12 commands the cutting station 11. In other words, the computation module 12 sends instructions to the cutting station 11 to remove the portion of the web W comprising the defect D based on the final position of said defect D calculated by the computation module 12.

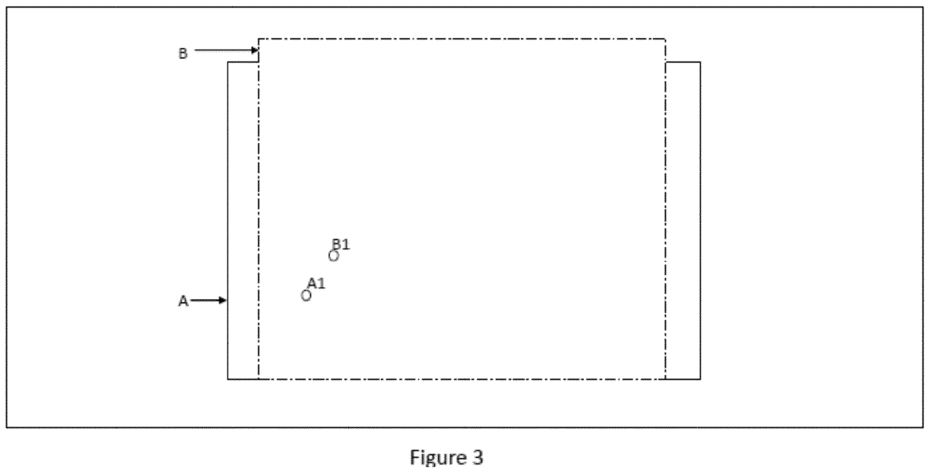

In figure 3, we can see two overlapping rectangles, one wider (A) and the other, which is narrow and longer (B). The second rectangle (B) represents the web after the tensioning effect. Note that there are two points in this figure, indicated as A1 and B1. They represent the same defect in the same web. Point A1 is an image captured before the web tensioning effect generated throughout the production, and point B1 is the same defect, in the same position, but after the tensioning effect. The distance between A1 and B1 represents the displacement computed by the computation module 12.

Point A1 and rectangle A is the position of the defect if there is not correction of the position made by the computation module. For instance, this is the position of the defect captured through a web inspection system according to the existing system, for instance the one disclosed in US 7,006,669.

Point B1 and rectangle B are the representation of the defect/occurrence after correction and repositioning by the computation module 12.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

### REFERENCE NUMBERS

- W: Roll of web material potentially comprising at least one defect to be mapped
- D: defect
- 1: System according to a first embodiment
- 2: Device for mapping
- 3: Mapping station
- 4: First module
- 5: Second module
- 6: Reference mark
- 6: defect
- 7: applicator
- 8: First sensor
- 9: UV light
- 10: Second sensor
- 11: Slitter or cutting station
- 12: Computation module

## Claims

1. Device for mapping (2) at least one defect (D) in a web of material (W) designed for being wound in at least a reel, the device (2) comprising a mapping station (3) for detecting and mapping an initial position of said defect (D) on the web (W),
the device (2) being **characterized in** the mapping station (3) comprises two modules, named a first module (4) and a second module (5), and a computation module (12), the first module (4) being upstream the second module (5),
the first module (4) being arranged for marking the web (W) with at least one reference mark (6) at a known position, and for determining the initial position of said defect (D), and
the second module (5) being arranged for detecting a new position of the reference mark (6) when said reference mark (6) is read by said second module (5),
the computation module (12) being arranged for computing a displacement of the reference mark (6) that occurred between the known position and the new position of the reference mark (6) so as to determine a final position of the detected defect (D) at second module (5) based on the computed displacement of the reference mark (6).

2. Device (2) according to claim 1, wherein the computation module (12) is further arranged for computing the displacement of the defect (D) based on the tension applied on the web (W) between the first module (4) and the second module (5).

3. Device (2) according to claims 1 or 2, wherein the device (2) is capable of determining the final position with precision of maximum +/- 2 meter, preferably +/-1 meter along the direction of the production process and with a precision of maximum +/- 2 mm, preferably 1 mm across the direction of the production process.

4. Device (2) according to any one of claims 1 to 3, wherein the computation module (12) is further arranged for assembling a web virtual map comprising the final position of the defect (D), said map being updated in real time depending on the displacement computed by the computation module (12).

5. Device (2) according to any one of claims 1 to 4, wherein the second module (5) is arranged for detecting displacement of the reference mark (6) across the direction of the production process and along the direction of the web production process.

6. Device (2) according to any one of claims 1 to 5, wherein the reference mark (6) is made with UV light paint so as to be detected upon UV radiation.

7. Device (2) according to any one of claims 1 to 6, wherein a plurality of reference marks (6) is distributed unevenly on the web (W), each marks having a known position.

8. Device (2) according to any one of claims 1 to 7, wherein said reference is applied on the edge of the web material (W), preferably on one side or on the two sides of said edge.

9. Device (2) according to any one of claims 1 to 8, wherein the web material (W) is chosen among fabric for instance a non woven material.

10. System (1) for mapping and removing at least one defect in a web of material (W) designed for being wound in at least a reel, the system (1) comprising a device for mapping (2) according to any one of claims 1 to 9,
the system (1) being **characterized in that** a cutting station (11) is coupled to said second module (5) of the mapping station (3), said cutting station (11) being arranged for removing a portion of the web material (W) comprising the detected defect (D) according to the final position.

11. System (1) according to claim 10, wherein the system (1) further comprises a winder for unwinding the web and a rewinder for rewinding the web and applying a tension on the web extending between said winder and rewinder, said winder being position upstream the first module, said rewinder being position downstream the cutting station (11).

12. System (1) according to claim 10 or 11, wherein the cutting station (12) is arranged either for splicing a portion of the web comprising the defect (D) or separating the reel comprising the defect (D).

13. Method for mapping at least one defect in a web of material (W) designed for being wound in at least a reel, the method comprising:
- i) Providing the web of material (W) to be wound to form the reel;
- ii) Detecting and mapping an initial position of at least a defect on the web;
- iii) Marking the web with at least one reference mark (6) at a known position with a first module (4);
- iv) Detecting a new position of the reference mark (6) with a second module (5) placed downstream the first module (5);
- v) Computing a displacement of the reference mark (6) that occurred between the known position and the new position of the reference mark (6);
- vi) Determining a final position of the detected defect at second module (5) based on the computed displacement of the reference mark (6).

14. Method according to claim 13, wherein the method further comprises :
- v) Assembling a web virtual map comprising the final position of the defect (D), said map being updated in real time depending on the computed displacement;

15. Method for removing at least one defect (D) in a web of material (W) designed for being wound in at least a reel, the method comprises :
i) Mapping at least on defect by using a method according to claims 13 or 14;
ii) Removing the detected defect either by splicing a portion of the web comprising the defect or separating the reel comprising the defect.
